# FASCICULE DE BREVET EUROPEEN

(11) **EP 2 828 644 B1**
(45) Date de publication et mention de la délivrance du brevet: **06.05.2020**
(21) Numéro de dépôt: 13709254.0
(22) Date de dépôt: 15.03.2013
(51) Int. Cl.: G01N 21/84, G01N 21/47, G01N 33/44

(54) **PROCÉDÉ ET DISPOSITIF DE CONTRÔLE NON DESTRUCTIF DE LA SANTÉ MATIÈRE NOTAMMENT DANS LES CONGÉS D'UNE PIÈCE COMPOSITE**
VERFAHREN UND VORRICHTUNG ZUR ZERSTÖRUNGSFREIEN PRÜFUNG DER MATERIALINTEGRITÄT EINES VERBUNDBAUTEILS, INSBESONDERE IN HOHLRÄUMEN DAVON
METHOD AND DEVICE FOR THE NONDESTRUCTIVE TESTING OF THE MATERIAL INTEGRITY OF A COMPOSITE PART, IN PARTICULAR IN THE HOLLOWS THEREOF

(30) Priorité: 20.03.2012 FR 1252494
(43) Date de publication de la demande: 28.01.2015
(73) Titulaire: European Aeronautic Defence And Space Company Eads France, 75016 Paris (FR); Airbus Operations S.A.S., 31060 Toulouse (FR)
(72) Inventeur: CAMPAGNE, Benjamin, F-44800 Saint Herblain (FR); PASSELANDE, Patrick, F-44220 Couëron (FR); BENTOUHAMI, Franck, F-85250 Chavannes en Paillers (FR)
(74) Mandataire: Gicquel, Olivier Yves Gérard
(86) Numéro de dépôt international: PCT/EP2013/055464
(87) Numéro de publication internationale: WO 2013/139709

(56) Documents cités:
- JP-A- 2010 052 255
- US-A1- 2010 007 894
- US-A1- 2010 312 524

## Description

L'invention concerne un procédé et un dispositif de contrôle non destructif de la santé matière notamment dans les congés d'une pièce composite. L'invention est plus particulièrement, mais non exclusivement, adaptée à la réalisation d'un contrôle non destructif automatique d'une pièce de grande dimension constituée d'un matériau composite comprenant des renforts fibreux continus dans une résine. Aussi, le dispositif et le procédé objets de l'invention sont particulièrement utiles dans le domaine des pièces composites constituant des ensembles ou des sous-ensembles structuraux d'un aéronef.

Les éléments constitutifs de la structure d'un véhicule et d'un aéronef en particulier, doivent être contrôlés pour en vérifier l'absence de défauts inhérents au processus de leur fabrication et qui seraient susceptibles, notamment, de réduire les caractéristiques de tenue structurales de ces pièces en service. La dimension de ces défauts est, d'une manière générale, de plusieurs ordres de grandeur inférieure à la dimension des pièces ainsi contrôlées. Plus particulièrement dans le cas de pièces composites comprenant une résine renforcée par un renfort fibreux sous la forme de fibres continues, ces pièces constituent des sous ensembles intégraux de la structure, moulés d'un seul tenant, et peuvent comporter des formes complexes.

Selon l'art antérieur, il est connu de contrôler ce type de pièce par des techniques utilisant la propagation d'ultrasons dans l'épaisseur de ladite pièce de sorte à y détecter des fissures, des délaminages, des manques de résine etc. Ces techniques de contrôle par ultrasons utilisent avantageusement une excitation et une mesure interférométrique par un ou plusieurs faisceaux laser, focalisés à la surface de la pièce et déplacés sur cette surface par un robot ou un manipulateur. Ces techniques de contrôle non destructif permettent de réaliser un contrôle automatisé de l'intégralité du volume de la pièce, à sec et sans l'utilisation d'agent de couplage acoustique entre les capteurs et la surface sur laquelle est réalisé le contrôle.

Dans le cas d'une pièce constituée d'un matériau composite renforcé par des fibres longues ou continues, il existe cependant des défauts susceptibles d'avoir une influence sur les caractéristiques mécaniques de la pièce, mais dont la présence n'est pas détectée par les contrôles ultrasonores, ou requiert pour être détectée par de tels contrôles, des conditions de mise en œuvre qui ne sont pas compatibles avec des conditions industrielles, ou encore dont la détection et surtout la caractérisation, nécessitent le recours à des contrôles destructifs. Ainsi, des défauts tels que des plissements ou des ondulations des fibres ne peuvent être détectés que par des coupes micrographiques ou par des méthodes visuelles non automatisables telles que la détection d'un « flash » orangé lorsque la zone contrôlée de la pièce est éclairée par une lumière blanche. La méthode visuelle dite « du flash de résine » repose sur le fait que les plissements ou ondulations de fibres se traduisent par des amas de résine situés majoritairement en surface dans les zones ou ces plissements sont constatés, c'est-à-dire, les zones où les fibres doivent suivre des trajectoires tourmentées et où le suivi de la trajectoire ne permet pas de leur appliquer une tension, comme par exemple dans les zones concaves des rayons de raccordement entre deux faces. Ces amas de résine sont détectés par l'éclairement de la surface, la lumière de cet éclairage étant modifiée par la résine translucide qui, en l'absence locale de renfort, produit un point plus lumineux. Cette technique de détection est aussi ancienne que la mise en œuvre des composites à renfort fibreux dans une matrice organique, à tel point que le défaut se confond avec sa méthode de détection, étant couramment désigné par le terme « flash de résine ».

Or, l'observation sur coupe micrographique ne fournit qu'une information locale et non représentative de l'étendue, donc de la nocivité du défaut, pas plus que la méthode du flash ne peut caractériser quantitativement ledit défaut, cette dernière méthode étant, de plus, fortement subjective et dépendante de l'expérience de l'opérateur qui la met en œuvre.

L'invention vise à résoudre les inconvénients de l'art antérieur et propose à cette fin un procédé pour la détection et la caractérisation automatiques d'un flash de résine à la surface d'une pièce composite comportant une matrice constituée d'une résine transparente ou diffusante et un renfort fibreux, lequel procédé comprend les étapes consistant à :
a. obtenir une définition géométrique de la zone de la pièce à contrôler ;
b. obtenir un fichier, dit fichier critère, comprenant des tolérances de répartition d'épaisseur de résine correspondant à la nature de la zone à contrôler ;
c. éclairer une portion, dite point de mesure, de la surface de ladite zone à contrôler à l'aide d'une source laser à faible cohérence temporelle ;
d. mesurer l'épaisseur de résine au point de mesure par une méthode interférométrique de tomographie optique cohérente dite OCT ;
e. enregistrer la valeur d'épaisseur mesurée au cours de l'étape d) ainsi que les coordonnées spatiales du point de mesure ;
f. déplacer la source laser en un autre point de mesure et reprendre les étapes c) à f) jusqu'à ce que l'ensemble de la zone de contrôle soit couverte ;
g. comparer le profil d'épaisseur de résine de la zone à contrôler avec le fichier critère.

Ainsi, par l'utilisation de la mesure OCT pour « *Optical Coherent Tomograhy»,* le procédé objet de l'invention permet d'obtenir la topographie des épaisseurs de résine jusqu'au premier pli dans la zone de mesure considérée, et ceci de manière automatique lorsque la tête de mesure OCT est portée par un manipulateur apte à déplacer ladite tête à la surface de la pièce. En comparant cette topographie à des critères préenregistrés, la pièce peut être déclarée conforme ou non, toujours de manière automatique. Ces critères de tolérance peuvent être déterminés, par exemple expérimentalement, en réalisant les étapes c) à f) du procédé objet de l'invention sur des échantillons comportant des défauts connus.

L'invention concerne également un dispositif pour la mise en œuvre entièrement automatisée du procédé objet de l'invention, lequel dispositif comporte :
i. une tête de mesure comprenant un module OCT ;
ii. un manipulateur apte à déplacer ladite tête OCT dans l'espace ;
iii. des moyens de pilotage dudit manipulateur ;
iv. des moyens informatiques comprenant des moyens de mémoire pour l'acquisition de la définition de la géométrie de la zone à contrôler, l'enregistrement des mesures, le stockage du fichier critère et la réalisation des calculs relatifs à la comparaison de l'enregistrement avec le fichier critère.

Ainsi, l'utilisation d'un tel dispositif permet d'automatiser entièrement le contrôle d'une pièce vis-à-vis des flash de résine.

L'invention peut être mise en œuvre selon les modes de réalisation avantageux exposés ci-après, lesquels peuvent être considérés individuellement ou selon toute combinaison techniquement opérante.

Avantageusement, le procédé objet de l'invention comprend avant l'étape g) une étape consistant à :
h. calculer la pente de la variation d'épaisseur de résine selon une des directions de balayage.

Ainsi, le procédé objet de l'invention permet, par l'intermédiaire d'un paramètre simple à mesurer, de détecter automatiquement la « signature » d'un flash de résine en surface de la pièce.

Selon un mode particulier de réalisation du procédé objet de l'invention, celui-ci comprend la réalisation des étapes c) à g) avec une tête de mesure comprenant un premier module et en cas de détection de la présence d'un flash à l'étape g), ledit procédé comprend les étapes consistant à :
j. changer la tête de mesure OCT ;
k. réaliser les étapes c) à g) avec la nouvelle tête de mesure comprenant un module de mesure OCT apte à améliorer la précision de détection du flash de résine.

Ainsi, la présence d'un flash de résine étant caractérisée par la présence d'anomalies d'épaisseur propagées sur des distances assez étendues, un premier balayage permet de réaliser un premier niveau de détection rapide, puis un second balayage, réalisé sur la même zone de contrôle ou sur une autre zone permet une mesure et une détection plus précises, la combinaison de ces étapes concourant à la rapidité du contrôle de la pièce.

Avantageusement, le dispositif objet de l'invention comporte :
v. un cheminement optique, dit bras de mesure, de longueur LM comportant un miroir de balayage apte à projeter sur la surface de la pièce le rayonnement laser de la source à faible cohérence temporelle ;
vi. un cheminement optique, dit bras de référence, distinct du cheminement optique du bras de mesure et comportant une fibre optique de longueur Lf et un miroir de référence placé à une distance Lz de la sortie de la fibre optique tel que LM=Lf+Lz.

Selon, ce mode de réalisation, le dispositif objet de l'invention permet de mettre en œuvre le principe de mesure OCT à une distance relativement importante de la pièce tout en conservant une tête de mesure compacte dont le principe de fonctionnement est adapté à la réalisation de tirs laser à ultrasons au moyen d'une autre source. Ainsi, le dispositif objet de l'invention permet de combiner différents types de mesure en un seul posage de la pièce à contrôler.

Selon un mode de réalisation particulier, le dispositif objet de l'invention, comprend :
vii. des moyens pour changer de tête active de mesure OCT ;
viii. une deuxième tête de mesure OCT comportant des moyens aptes à régler la distance de focalisation du faisceau laser à faible cohérence par rapport à la surface de la pièce.

Ainsi le dispositif objet de l'invention est apte à mettre en œuvre le procédé de mesure décrit précédemment comportant deux phases de mesure avec des niveaux de précision différents.

L'invention est exposée ci-après selon ses modes de réalisation préférés, nullement limitatifs, et en référence aux figures 1 à 7, dans les quelles :
- la figure 1 montre selon une vue en coupe un rayon de raccordement dans une pièce composite stratifiée, figure 1A en l'absence de défaut de type plissement, figure 1B selon un exemple de présence d'un plissement et figure 1C selon une vue de détail de l'épaisseur de résine jusqu'au premier pli en présence d'un défaut ;
- la figure 2 représente schématiquement et en perspective le dispositif objet de l'invention ;
- la figure 3 est une vue schématique d'un module de mesure OCT ;
- la figure 4 montre schématiquement une amélioration de la tête de mesure de la figure 3, selon un exemple de réalisation du dispositif objet de l'invention ;
- la figure 5 représente en coupe, figure 5A, un exemple schématisé d'une série de mesures d'épaisseur au niveau d'un flash de résine, et montre figure 5B le taux de variation de ces mesures d'épaisseurs utilisé pour détecter ledit flash ;
- la figure 6 est une vue en perspective d'un exemple de réalisation d'une tête de mesure OCT adaptée la mesure précise de l'épaisseur de résine dans un flash ;
- et la figure 7 est un synoptique du procédé objet de l'invention.

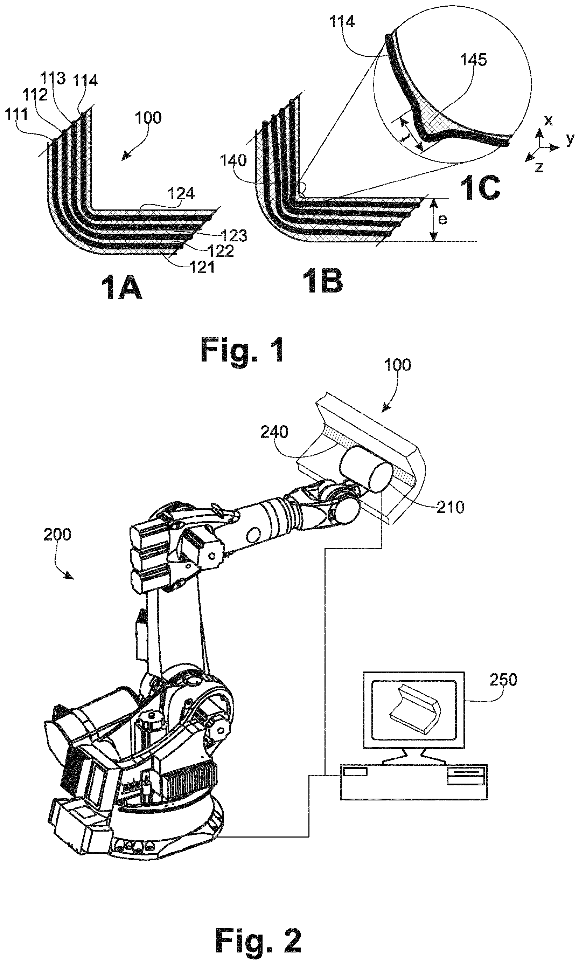

Figure 1A, une pièce composite (100) est constituée d'une stratification de plis (111, 112, 113, 114) de renforts fibreux, séparés par des couches de résine (121, 122, 123, 124) d'épaisseur sensiblement uniforme. À titre d'exemple non limitatif, les plis peuvent être constitués de tissus ou de nappes unidirectionnelles ou de non tissés multidirectionnels de fibres continues de carbone, de verre ou d'aramide. Les couches de résine peuvent être de nature thermodurcissable telle qu'une résine époxyde ou de nature thermoplastique. Cette stratification est obtenue par tout procédé connu de l'homme du métier, à partir de plis secs ou pré-imprégnés. Figure 1B, dans des zones particulières de la stratification où il est difficile d'imposer une tension aux fibres lors de la dépose, des ondulations ou plissements (140) sont susceptibles d'apparaître. La présence de tels plissements, ou ondulations, réduit localement la capacité de renfort des fibres et peut également entraîner des zones de concentration de contrainte ou déformation. De tels plissements (140) s'étendent sur plusieurs plis. L'épaisseur (e) globale de la pièce étant imposée par l'outillage de mise en œuvre lors de la cuisson ou de la consolidation du composite, la présence de ces ondulations n'est pas détectable par une simple mesure de l'épaisseur et la structure de la stratification n'est généralement pas modifiée de manière suffisamment sensible pour que la présence de cette ondulation puisse être détectée par des techniques acoustiques. En revanche, figure 1C, la présence de ce plissement, se traduit par une variation localisée (145) de l'épaisseur de résine entre la face externe de la pièce et le premier pli (114). Cet amas de résine, couramment dénommé flash, présente une étendue transversale (t dans le plan xy) réduite mais une étendue longitudinale (selon z) nettement plus importante, de plusieurs ordres de grandeur. Ainsi, si t est de l'ordre du millimètre, l'étendue longitudinale du flash est fréquemment de plusieurs centaines de millimètres voire de plusieurs mètres. Ainsi, la demanderesse a pu établir que la hauteur et la forme du flash (145) de résine sont représentatives de plissements et ondulations de fibres situées derrière ce flash, dans l'épaisseur de la pièce, et que la mesure de l'épaisseur de résine et surtout de la variation d'épaisseur de résine jusqu'au premier pli permet de détecter la signature caractéristique d'un flash de résine résultant d'une ondulation ou d'un plissement de fibres, et par suite, que cette information peut être avantageusement utilisée pour quantifier ce type de défaut.

Figure 2, le dispositif objet de l'invention comprend un manipulateur (200) apte à déplacer une tête de mesure (210) de type OCT le long de la pièce (100) à une distance sensiblement constante de la surface de ladite pièce et compatible avec la distance de focalisation de la source laser à faible cohérence temporelle du dispositif OCT. À cette fin, le manipulateur (200) est préférentiellement piloté par un dispositif informatique (250) comprenant une définition géométrique de la pièce (100) à contrôler et de son positionnement spatial dans l'espace du manipulateur (200). Avantageusement, le dispositif informatique (250) pilote également la tête de mesure (210) et réalise l'acquisition des points de mesure le long de la zone (240) à contrôler, ce qui permet de localiser de manière précise ces points de mesure sur la géométrie enregistrée de la pièce (100) contrôlée. Préférentiellement, ce contrôle est réalisé dans les zones les plus susceptibles d'être sujettes à des plissements de fibres, par exemple dans les congés de raccordement entre deux faces non coplanaires et préférentiellement dans la partie concave de ces congés.

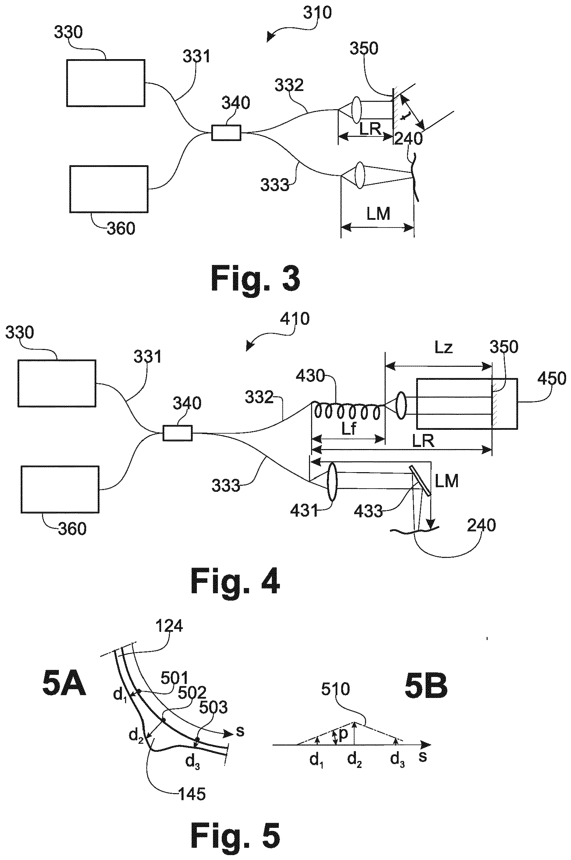

Figure 3, la méthode de mesure OCT utilise une source lumineuse (330) de faible cohérence temporelle. Le faisceau d'illumination est focalisé à la surface de la zone analysée. Les photons rétrodiffusés par la pièce interfèrent avec un faisceau de référence, ledit faisceau de référence étant obtenu en séparant le faisceau (331) de la source lumineuse, dans un séparateur de faisceau (340), une moitié (333) de ce faisceau est dirigée vers la surface (240) de la zone à analyser, en constituant un bras de mesure, de longueur LM, et l'autre moitié (332) du faisceau, est dirigée vers un miroir de référence (360), constituant un bras de référence de longueur LR. Le bras de mesure et le bras de référence doivent être de longueur égale. Un spectromètre détecteur (360) permet de quantifier en signal l'interférence des faisceaux et d'en déduire des caractéristiques de la pièce, notamment son épaisseur. La mesure d'épaisseur par la méthode OCT n'est possible que dans les milieux transparents ou translucides. Ainsi, cette mesure d'épaisseur ne réalise que la mesure de l'épaisseur locale de la couche de résine (124, figure 1) entre la surface de la pièce et le premier pli (114, figure 1). Ces deux milieux, la résine et le pli de renforts, ont des indices de réfraction très différents et une interférence intense se produit à la frontière entre ces deux milieux. Cette propriété particulière est mise à profit pour détecter la présence d'un flash de résine.

Figure 4, selon un mode de réalisation particulier, le module OCT (410) intégré à la tête de mesure (210) du dispositif objet de l'invention comprend une fibre optique (430) de longueur optique Lf, dans le cheminement optique constituant le bras de référence. La longueur optique tient compte de l'indice de la fibre optique. Le miroir de référence (350) est monté mobile en translation sur un chariot (450) de sorte que la distance, Lz, entre la sortie de la fibre optique (430) et ledit miroir de référence, peut être pilotée, la longueur LR du bras de référence étant la somme LR = Lf + Lz. Ce mode de réalisation particulier permet d'éloigner la tête de mesure (210) de la surface de la pièce (100) et de réaliser le balayage de cette surface, au moins en partie, par un miroir (433) de balayage. Ainsi, d'une part un premier balayage peut être réalisé rapidement et en réduisant les risques de collision entre la pièce (100) et le manipulateur (200) ou la tête de mesure (210), simplifiant ainsi la programmation des déplacements, mais aussi, ce dispositif permet d'atteindre des zones (240) à contrôler difficilement accessibles.

Le cheminement optique correspondant au bras de mesure, de longueur LM, comprend un miroir de balayage (433) apte à projeter une tache de mesure de forme et de dimension contrôlées sur la zone (240) à contrôler. À cette fin, ledit cheminement optique comprend une lentille (431) de focalisation permettant d'obtenir une tache optique inférieure à un diamètre donnée. Le diamètre, D, de la lentille (431) de focalisation est fonction du diamètre, D', de la tache optique visée à la surface de la pièce, de la distance de focalisation, f, et de la longueur d'onde λ du rayonnement laser utilisé, par la relation D'=4λf/πD. En augmentant le diamètre de la lentille, ce qui revient à augmenter l'ouverture numérique de l'objectif, la résolution transverse est augmentée mais la profondeur de champ est réduite. Ces résolutions permettent de définir les dimensions de la tranche d'où proviennent les photons qui vont interférer. L'image de l'amplitude du signal d'interférence correspond à l'image de cette coupe, d'où l'expression d'image tomographique. En pratique, selon ce mode de réalisation utilisant un miroir de balayage (433) placé à une distance importante de la pièce, la distance LM est très proche de la distance entre ledit miroir et la surface de la pièce (240).

Le principe d'interférométrie optique utilisé pour l'OCT nécessite de conserver l'égalité des longueurs LM et LR dans une tolérance fonction de l'application visée. Aussi, le dispositif (450) de translation du miroir de référence (350) permet, d'une part, d'adapter la longueur, LR, du bras de référence aux variations de longueur du bras de mesure consécutives à la forme de la pièce. Cette compensation s'effectue par une variation de longueur Lz dans une plage adaptée à la nature des pièces contrôlées, par exemple Lz = ±250 mm pour le contrôle de pièces aéronautiques de grande dimension.

D'autre part, le miroir de référence (350) du système OCT est déplacé dans une plage réduite de quelques mm pour réaliser la mesure de l'épaisseur de résine. Ainsi, le dispositif (450) de déplacement du miroir peut comprendre deux actionneurs assurant respectivement les déplacements dans les deux plages de variation de Lz. Ainsi, la longueur du bras de référence peut être équivalente à celle du bras de mesure sans que l'encombrement de la tête de mesure ne soit augmenté dans les mêmes proportions.

Figure 5A, selon un exemple de réalisation, une première série de mesures d'épaisseur (d₁, d₂, d₃) de la première couche de résine(124) est réalisé selon un pas grossier en fonction d'une abscisse curviligne (s) transversalement à la zone de contrôle, en des points de mesure (501, 502, 503) définis. Figure 5B, la variation de ces épaisseurs le long de cette abscisse curviligne (s) qui correspond à direction de balayage, se traduit par un profil (510) de variation. Selon un exemple de réalisation, la pente (p) de ce profil de variation est un critère permettant de détecter la présence d'un flash de résine. Ainsi, à partir d'une série de mesures (d₁, d₂, d₃) réalisées le long de la zone à contrôler, la probabilité de présence d'un flash de résine peut être estimée de manière automatique par l'analyse des variations des épaisseurs de résines dans la première couche (124). Cette probabilité peut être obtenue par comparaison avec des signatures types comprises, par exemple, dans une base de données enregistrée dans les moyens informatiques, ou par apprentissage du dispositif, notamment au moyen de techniques d'intelligence artificielle tel qu'un réseau de neurones.

Lorsque cette probabilité de présence est jugée significative, la mesure peut être affinée à la fois en termes de pas de mesure des points et en termes de précision de l'épaisseur de résine, ceci afin de rapprocher ledit profil (510) de la nature ou de l'intensité des plissements ou ondulations qui lui donnent naissance. Ainsi, une première série de mesure rapide peut être réalisée par balayage avec une tête de mesure comprenant un module OCT (410, figure 4) permettant de réaliser la mesure à une distance relativement importante de la surface, par exemple LM=300 mm. Puis, dans les zones où la probabilité de présence d'un flash de résine est détectée comme significative, réaliser une série de mesures plus précises avec une tête de mesure dont le module OCT (310, figure 3) est adapté à une distance LM plus proche, par exemple comprise entre 10 mm et 30 mm pour caractériser le ledit flash (145) par ces mesures d'épaisseur plus précises. Cette deuxième série de mesures est préférentiellement réalisée avec un pas de mesure resserré. À cette fin, le manipulateur (200) comprend avantageusement des moyens (non représentés) pour changer de tête de mesure OCT.

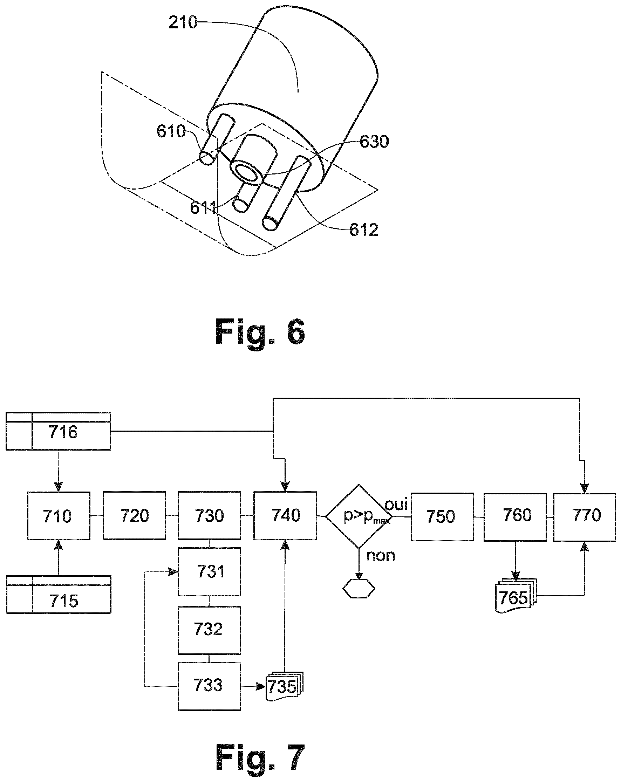

Figure 6, la tête de mesure (210) comprend, selon un exemple de réalisation, des moyens (610, 611, 612), par exemple sous la forme de pieds extensibles dont la longueur peut être pilotée, par exemple au moyen d'actionneurs à commande numérique et qui, mis en appui sur la surface de la pièce, permettent de positionner l'objectif (630) comprenant la lentille de focalisation du faisceau laser constituant le bras de mesure, autorisant ainsi une plus grande précision dans la réalisation de la mesure de l'épaisseur de résine. Alternativement ou de manière complémentaire, le positionnement de l'objectif (630) par rapport à la surface de la pièce peut être réalisé par des moyens de mesure télémétriques (non représentés).

Figure 7, selon un exemple de réalisation, le procédé objet de l'invention, comprend une première étape (710) d'initialisation, réalisée par les moyens informatiques (250), consistant à acquérir une définition géométrique (715) de la pièce à contrôler. Cette définition géométrique peut être issue d'une définition CFAO de la pièce à contrôler, dans des formats connus de l'homme du métier. Selon un exemple de réalisation, l'étape d'initialisation (710) comprend également l'acquisition d'un fichier (716) dit fichier critère qui comprend, en fonction de la nature de la pièce considérée, des valeurs de tolérances relatives au profil de variation des épaisseurs mesurées. À partir de ces informations, un programme de déplacement du manipulateur est généré au cours d'une étape de programmation (720). Cette étape de programmation peut être réalisée de manière automatique ou par un programmeur, le cas échéant en profitant d'une assistance en réalité virtuelle pour gérer les problèmes de collision. Le programme ainsi généré est envoyé vers le manipulateur, qui, au cours d'une étape d'acquisition (730) réalise la mesure des épaisseurs de résine jusqu'au premier pli dans les zones concernées. Ces mesure consistent à éclairer (731) chaque point de mesure avec la source OCT, et à déterminer (732) l'épaisseur de résine jusqu'au premier pli en ce point, et finalement, à enregistrer (733) l'épaisseur mesurée en ce point avec les coordonnées spatiale dudit point dans un fichier (735). Au cours d'une étape de traitement (740), le profil de mesure d'épaisseur ainsi réalisé est comparé avec le fichier critère (716). À titre d'exemple, la comparaison (745) porte sur la valeur de la pente (*p*) du profil. Dans le cas où cette pente est inférieure à une valeur de pente *(pₘₐₓ)* alors, la pièce est déclarée conforme. Dans le cas où la valeur de la pente (*p*) est supérieure à la valeur maximale admissible de pente (*pₘₐₓ*) et selon un exemple de réalisation du procédé objet de l'invention, la tête de mesure est changée au cours d'une étape de reconfiguration (750). Un nouveau cycle d'acquisition (760) est lancé avec la nouvelle tête de mesure, les points d'acquisition étant enregistré dans un fichier d'acquisition (765). Ce fichier d'acquisition est alors comparé (770) avec le fichier critère (716) pour caractériser le flash.

La description ci-avant et les exemples de réalisation montrent que l'invention atteint les objectifs visés. En particulier, elle permet la détection automatique d'un flash de résine dans une pièce en composite et la caractérisation de ce flash en vue de détecter la présence d'un plissement ou d'une ondulation hors tolérances des fibres de renfort.

## Revendications

1. Procédé pour la détection et la caractérisation automatiques d'un flash (145) de résine à la surface d'une pièce (100) composite comportant une matrice constituée d'une résine transparente ou diffusante et un renfort fibreux (111, 112, 113, 114), **caractérisé en ce qu'**il comprend les étapes consistant à :
a. obtenir (710) une définition géométrique (715) de la zone (240) de la pièce à contrôler ;
b. obtenir (710) un fichier, dit fichier critère (716), comprenant des tolérances de répartition d'épaisseur de résine correspondant à la nature de la zone à contrôler;
c. éclairer (731) une portion, dite point de mesure (501, 502, 503), de la surface de ladite zone à contrôler à l'aide d'une source laser (330) à faible cohérence temporelle ;
d. mesurer (732) l'épaisseur (d₁, d2, d₃) de résine au point de mesure par une méthode interférométrique de tomographie optique cohérente dite OCT;
e. enregistrer (733) la valeur d'épaisseur mesurée au cours de l'étape d) ainsi que les coordonnées spatiales du point de mesure (501, 502, 503) ;
f. déplacer (730) la source laser (210) en un autre point de mesure et reprendre les étapes c) à f) de sorte à réaliser un balayage jusqu'à ce que l'ensemble de la zone de contrôle (240) soit couverte ;
g. comparer (740) le profit (510) d'épaisseur de résine de la zone à contrôler avec le fichier critère (716).

2. Dispositif pour la mise en œuvre entièrement automatisée d'un procédé selon la revendication 1, **caractérisé en ce qu'**il comporte :
i. une tête (210) de mesure OCT comprenant un module de mesure (310, 410) OCT;
ii. un manipulateur (200) apte à déplacer ladite tête OCT dans l'espace ;
iii. des moyens (250) de pilotage dudit manipulateur ;
iv. des moyens informatiques (250) comprenant des moyens de mémoire pour l'acquisition de la définition de la géométrie de la zone (240) à contrôler, l'enregistrement des mesures, le stockage du fichier critère (716) et la réalisation des calculs relatifs à la comparaison de l'enregistrement (735, 765) avec le fichier critère (716) ;
v. des moyens de contrôle (250) configurés pour exécuter le procédé selon la revendication 1.

3. Procédé selon la revendication 1 **caractérisé en ce qu'**il comprend avant l'étape g) une étape consistant à :
h. calculer la pente (p) de la variation d'épaisseur de résine selon une **des directions de balayage.**

4. Procédé selon la revendication 1, **caractérisé en ce qu'**il comprend la réalisation des étapes c) à g) avec une tête de mesure comprenant un premier module (410) OCT et qu'en cas de détection de la présence d'un flash à l'étape g) il comprend les étapes consistant à :
j. changer (750) la tête de mesure OCT ;
k. réaliser (760) les étapes c) a g) avec la nouvelle tête de mesure comprenant un module de mesure (310) OCT apte à améliorer la précision de détection du flash de résine.

5. Dispositif selon la revendication 2, **caractérisé en ce qu'**il comporte :
v. un cheminent optique (333), dit bras de mesure, de longueur LM comportant un miroir (433) de balayage apte à projeter sur la surface de la pièce le rayonnement laser de la source a faible cohérence temporelle ;
vi. un cheminement optique (332), dit bras de référence, distinct du cheminement optique du bras de mesure et comportant une fibre optique (430) de longueur Lf et un miroir (350) de référence place à une distance Lz de la sortie de la fibre optique tel que LM=Lf+Lz.

6. Dispositif selon la revendication 5, pour la mise en œuvre du procédé de la revendication 4, **caractérisé en ce qu'**il comprend :
vii. des moyens pour changer de tête active (210) de mesure OCT ;
viii. une deuxième tête de mesure OCT comportant des moyens (610, 611, 612) aptes à régler la distance de focalisation du faisceau laser à faible cohérence par rapport à la surface de la pièce.

## Patentansprüche

1. Verfahren zur automatischen Erkennung und Charakterisierung eines Harz-Lichtblitzes (145) an der Oberfläche eines Verbundbauteils (100), das eine aus einem transparenten oder streuenden Harz bestehende Matrix und eine Faserverstärkung (111, 112, 113, 114) beinhaltet, **dadurch gekennzeichnet, dass** es die folgenden Schritte umfasst:
a. Erhalten (710) einer geometrischen Definition (715) des Bereichs (240) des zu prüfenden Bauteils;
b. Erhalten (710) einer Datei, Kriteriendatei (716) genannt, die Harzdickenverteilungstoleranzen umfasst, die der Art des zu prüfenden Bereichs entsprechen;
c. Beleuchten (731) eines Abschnitts, Messpunkt (501, 502, 503) genannt, der Oberfläche des zu prüfenden Bereichs mithilfe einer Laserquelle (330) mit geringer zeitlicher Kohärenz;
d. Messen (732) der Harzdicke (d₁, d2, d₃) im Messpunkt mit einer interferometrischen Methode, der optischen Kohärenztomografie, OCT genannt;
e. Aufzeichnen (733) des im Schritt d) gemessenen Dickenwerts sowie der räumlichen Koordinaten des Messpunktes (501, 502, 503);
f. Bewegen (730) der Laserquelle (210) zu einem anderen Messpunkt und Wiederholen der Schritte c) bis f), so dass ein Scan ausgeführt wird, bis der gesamte Prüfbereich (240) abgedeckt ist;
g. Vergleichen (740) des Harzdickenprofils (510) des zu prüfenden Bereichs mit der Kriteriendatei (716).

2. Vorrichtung zur vollautomatisierten Implementierung eines Verfahrens nach Anspruch 1, **dadurch gekennzeichnet, dass** sie beinhaltet:
i. einen OCT-Messkopf (210), der ein OCT-Messmodul (310, 410) umfasst;
ii. ein Handlinggerät (200), das geeignet ist, den OCT-Kopf im Raum zu bewegen;
iii. Einrichtungen (250) zur Ansteuerung des Handlinggeräts;
iv. Datenverarbeitungseinrichtungen (250), die Speichereinrichtungen umfassen, zum Erfassen der Definition der Geometrie des zu prüfenden Bereichs (240), Aufzeichnen der Messungen, Speichern der Kriteriendatei (716) und Ausführen der Berechnungen bezüglich des Vergleichs der Aufzeichnung (735, 765) mit der Kriteriendatei (716);
v. Steuerungseinrichtungen (250), die dazu ausgestaltet sind, das Verfahren nach Anspruch 1 durchzuführen.

3. Verfahren nach Anspruch 1, **dadurch gekennzeichnet, dass** es vor dem Schritt g) einen Schritt umfasst, der in Folgendem besteht:
h. Berechnen der Neigung (p) der Harzdickenänderung entlang einer der Scan-Richtungen.

4. Verfahren nach Anspruch 1, **dadurch gekennzeichnet, dass** es die Ausführung der Schritte c) bis g) mit einem Messkopf umfasst, der ein erstes OCT-Modul (410) umfasst, und dass es im Fall des Erkennens des Vorliegens eines Lichtblitzes im Schritt g) Schritte umfasst, die in Folgendem bestehen:
j. Auswechseln (750) des OCT-Messkopfes;
k. Ausführen (760) der Schritte c) bis g) mit dem neuen Messkopf, der ein OCT-Messmodul (310) umfasst, das geeignet ist, die Erkennungsgenauigkeit des Harz-Lichtblitzes zu verbessern.

5. Vorrichtung nach Anspruch 2, **dadurch gekennzeichnet, dass** sie beinhaltet:
v. einen optischen Pfad (333), Messarm genannt, mit der Länge LM, der einen Scan-Spiegel (433) beinhaltet, der geeignet ist, auf die Oberfläche des Bauteils die Laserstrahlung der Quelle mit geringer zeitlicher Kohärenz zu projizieren;
vi. einen optischen Pfad (332), Referenzarm genannt, der vom optischen Pfad des Messarms verschieden ist und eine optische Faser (430) mit der Länge Lf und einen Referenzspiegel (350), der in einem Abstand Lz vom Ausgang der optischen Faser angeordnet ist, beinhaltet, so dass LM=Lf+Lz.

6. Vorrichtung nach Anspruch 5 zur Implementierung des Verfahrens von Anspruch 4, **dadurch gekennzeichnet, dass** sie umfasst:
vii. Einrichtungen zum Auswechseln des aktiven OCT-Messkopfes (210);
viii. einen zweiten OCT-Messkopf, der Einrichtungen (610, 611, 612) beinhaltet, die geeignet sind, den Fokussierabstand des niedrigkohärenten Laserstrahls in Bezug auf die Oberfläche des Bauteils einzustellen.

## Claims

1. Method for automatically detecting and characterizing a resin flash (145) on the surface of a composite part (100) comprising a matrix formed from a transparent or scattering resin and a fibrous reinforcement (111, 112, 113, 114), **characterized in that** the method comprises the steps consisting of:
a. obtaining (710) a geometric definition (715) of the zone (240) of the part to be tested;
b. obtaining (710) a file, referred to as the criteria file (716), comprising resin thickness distribution tolerances corresponding to the nature of the zone to be tested;
c. illuminating (731) a portion, referred to as the measurement point (501, 502, 503), of the surface of said zone to be tested using a laser source (330) having a low temporal coherence;
d. measuring (732) the resin thickness (d₁, d₂, d₃) at the measuring point using an interferometric approach based on optical coherence tomography, i.e. what is called OCT;
e. recording (733) the thickness value measured in step d) and the spatial coordinates of the measurement point (501, 502, 503);
f. moving (730) the laser source (210) to another measurement point and repeating steps c) to f) so as to carry out a scan until the zone (240) to be tested has been entirely covered;
g. comparing (740) the resin thickness profile (510) of the zone to be tested with the criteria file (716).

2. Fully automatic device for implementing a method according to Claim 1, **characterized in that** the fully automatic device comprises:
i. an OCT measurement head (210) comprising an OCT measurement module (310, 410);
ii. a manipulator (200) able to move said OCT head in space;
iii. means (250) for controlling said manipulator;
iv. information-processing means (250) comprising memory means for acquiring the definition of the geometry of the zone (240) to be tested, for recording the measurements, for storing the criteria file (716) and for carrying out calculations relating to the comparison of the recording (735, 765) with the criteria file (716);
v. control means (250) configured to execute the method according to Claim 1.

3. Method according to Claim 1, **characterized in that** it comprises, before step g), a step consisting in:
h. calculating the slope (p) of the resin thickness variation in one **of the scan directions.**

4. Method according to Claim 1, **characterized in that** it comprises carrying out steps c) to g) with a measurement head comprising a first OCT module (410) and **in that**, if the presence of a flash is detected in step g), it comprises the steps consisting of:
j. changing (750) the OCT measurement head;
k. carrying out (760) steps c) to g) with the new measurement head comprising an OCT measurement module (310) able to improve the detection precision of the resin flash.

5. Device according to Claim 2, **characterized in that** it comprises:
v. an optical path (333), called the measurement leg, of length LM, comprising a scanning mirror (433) able to project onto the surface of the part the laser radiation from the low temporal coherence source;
vi. an optical path (332), called the reference leg, separate from the optical path of the measurement leg, and comprising an optical fiber (430) of length Lf and a reference mirror (350) placed at a distance Lz from the exit of the optical fiber such that LM=Lf+Lz.

6. Device according to Claim 5, for implementing the method of Claim 4, **characterized in that** it comprises:
vii. means for changing the active OCT measurement head (210);
viii. a second OCT measurement head comprising means (610, 611, 612) able to adjust the focal distance of the low coherence laser beam relative to the surface of the part.
